# EUROPÄISCHE PATENTANMELDUNG

(11) **EP 4 648 267 A1**
(43) Veröffentlichungstag der Anmeldung: **12.11.2025**
(21) Anmeldenummer: 25173745.8
(22) Anmeldetag: 30.04.2025
(51) Int. Cl.: H02K 15/0273, H02K 15/12

(54) **VERFAHREN ZUR HERSTELLUNG VON LAMELLENPAKETEN AUS AUFEINANDER LIEGENDEN LAMELLEN SOWIE ANLAGE ZUR DURCHFÜHRUNG EINES SOLCHEN VERFAHRENS**

(30) Priorität: 05.05.2024 DE 102024001492
(71) Anmelder: Feintool International Holding AG, 3250 Lyss (CH)
(72) Erfinder: Böker, Björn, 73733 Esslingen (DE); Hilligardt, Oliver, 74399 Walheim (DE); Kirigo, Duncan Maina, 75031 Eppingen (DE)
(74) Vertreter: Patentanwälte Jackisch-Kohl und Kohl

(57) **Zusammenfassung**

Das Verfahren dient zur Herstellung von Lamellenpaketen (3) aus aufeinander liegenden Lamellen (2), die aus einem Ausgangsmaterial (1) herausgetrennt und unter Vermittlung eines strahlungsaktivierbaren Klebemittels (4) innerhalb des Lamellenpaketes (3) miteinander verbunden werden. Das Klebemittel (4) wird mit einer Strahlung mit einem Wellenlängenbereich unterhalb von IR-Strahlung zur Voraktivierung bestrahlt. Die hierzu eingesetzte Anlage hat wenigstens eine Auftragsvorrichtung zum Aufbringen des Klebemittels (4) auf eine Lamelle (2). Das Klebemittel (4) wird mit wenigstens einer Strahlungsquelle (32) bestrahlt, die eine Strahlung in einem Wellenlängenbereich unterhalb des Infrarotbereiches aussendet.

## Beschreibung

Die Erfindung betrifft ein Verfahren zur Herstellung von Lamellenpaketen aus aufeinander liegenden Lamellen nach dem Oberbegriff des Anspruches 1 sowie eine Anlage zur Durchführung eines solchen Verfahrens nach dem Oberbegriff des Anspruches 12.

Bei der Herstellung von Lamellenpaketen, wie sie für Rotoren oder Statoren von Elektromotoren oder Generatoren eingesetzt werden, ist es bekannt, die Lamellen aus einem Elektroband oder aus Metalltafeln herauszutrennen, die aufeinandergelegt werden, um den Lamellenstapel zu bilden. Die aufeinander liegenden Lamellen können auf unterschiedliche Weise fest miteinander verbunden werden. Eine Verbindungsmöglichkeit ist die Verwendung eines Klebemittels, mit dem aufeinandersitzende Lamellen miteinander verbunden werden. Hierbei werden Klebemittel eingesetzt, die nach dem Aufbringen zur Aktivierung bestrahlt werden. Hierfür wird eine Infrarotstrahlung eingesetzt, mit der eine Aktivierung gut erreicht werden kann, die aber in der aus Metall bestehenden Lamelle Wärme erzeugt. Die Folge hiervon ist eine nicht gewollte Verformung der Lamelle, wodurch die Bildung des Lamellenpaketes beeinträchtigt wird. Auch führt die Erwärmung der Lamelle zu unerwünschten elektrischen Störungen im späteren Einsatz des Rotors bzw. Stators. Um solche unzulässigen Verformungen der Lamelle so klein wie möglich zu halten, werden Kühleinrichtungen eingesetzt, die den apparativen Aufwand jedoch erhöhen.

Der Erfindung liegt die Aufgabe zugrunde, das gattungsgemäße Verfahren und die gattungsgemäße Anlage so auszubilden, dass die Stapelbildung der Lamellen mit Hilfe von Klebemittel zuverlässig und ohne nachteilige Beeinflussung elektrischer Größen beim späteren Einsatz des Lamellenpaketes gewährleistet ist.

Diese Aufgabe wird beim gattungsgemäßen Verfahren erfindungsgemäß mit den kennzeichnenden Merkmalen des Anspruches 1 und bei der gattungsgemäßen Anlage erfindungsgemäß mit den kennzeichnenden Merkmalen des Anspruches 12 gelöst.

Beim erfindungsgemäßen Verfahren wird ein Klebemittel eingesetzt, das mit einer Strahlung voraktiviert werden kann, die in einem Wellenlängenbereich unterhalb des Wellenlängenbereiches einer IR-Strahlung liegt. Dadurch entsteht bei der Aktivierung des Klebemittels keine Wärme, die zu einem Verzug oder einer Verformung der Lamellen führen würde. Darum ist bei Durchführung des erfindungsgemäßen Verfahrens auch keine Kühlung der Lamelle oder des Lamellenpaketes notwendig, so dass die hierfür eingesetzte Anlage einfach im Aufbau und kostengünstig in der Anschaffung ist.

Die Reaktionszeit dieses Klebemittels ist so kurz, dass das Klebemittel bei der Stapelbildung beim Auflegen der jeweils nächsten Lamelle bereits so reagieren kann, dass die aufeinander liegenden Lamellen ausreichend fest miteinander verbunden sind. Diese Festigkeit reicht aus, das jeweils gebildete Lamellenpaket unmittelbar nach der Fertigstellung zu handhaben, insbesondere das Lamellenpaket zum Kunden zu transportieren, ohne dass die Gefahr besteht, dass das Lamellenpaket auseinanderfällt.

Ein vorteilhafter Wellenlängenbereich der Strahlung liegt in einem Bereich zwischen etwa 300 µm und etwa 700 µm. In diesem Wellenlängenbereich lässt sich das Klebemittel optimal voraktivieren.

Beim erfindungsgemäßen Verfahren wird das Klebemittel so voraktiviert, dass das gebildete Lamellenpaket handlebar ist. Für den Hersteller des Lamellenpaketes hat dies den Vorteil, dass er die Lamellenpakete sofort nach der Paketbildung beispielsweise an die Kunden verschicken kann und nicht abwarten muss, bis das Klebemittel eine ausreichende Paketfestigkeit erzielt hat.

Als besonders vorteilhaftes Klebemittel hat sich ein kationisch härtender Epoxidharz-Klebstoff herausgestellt.

Das erfindungsgemäße Verfahren ist vorteilhaft so gestaltet, dass das Klebemittel nach der Voraktivierung und während und auch nach der Lamellenpaketbildung so aushärtet, dass das Lamellenpaket die für den späteren Einsatzfall erforderliche Paketfestigkeit aufweist.

Eine besonders einfache Verfahrensführung ergibt sich, wenn die Strahlung so gerichtet ist, dass sie auf das auf der Lamelle oder dem Ausgangsmaterial befindliche Klebemittel gerichtet ist. Dann lässt sich das Klebemittel einwandfrei voraktivieren.

Bei einer einfachen Verfahrensführung fällt die Strahlung senkrecht auf die Lamelle bzw. das Ausgangsmaterial. Die Bestrahlung des auf der Lamelle bzw. des Ausgangsmaterials befindlichen Klebstoffes kann je nach Ausdehnung des Klebemittels flächig oder auch punkt- bzw. spotförmig erfolgen.

Bei einer anderen vorteilhaften Ausführungsform ist die Strahlung so gerichtet, dass sie nicht senkrecht, sondern unter einem von 90° abweichenden Winkel auf die Lamelle bzw. das Ausgangsmaterial fällt. Dies kann beispielsweise dann vorteilhaft sein, wenn die Einbaugegebenheiten der Anlage den Einbau einer Strahlungsquelle senkrecht oberhalb der Lamelle bzw. des Ausgangsmateriales nicht zulassen.

Bei einer weiteren erfindungsgemäßen Ausbildung wird das Klebemittel bereits vor dem Aufbringen auf die Lamelle oder das Ausgangsmaterial während des Austrages von der Auftragvorrichtung zur Lamelle bzw. zum Ausgangsmaterial während des Fluges bestrahlt. Wenn das Klebemittel auf die Lamelle bzw. das Ausgangsmaterial fällt, ist es bereits voraktiviert. Diese Vorgehensweise ermöglicht eine besonders einfache und zuverlässige Lamellenpaketbildung.

Bei dieser Verfahrensweise wird die Strahlung vorteilhaft senkrecht zum Fallweg des Klebemittels berichtet.

Das Klebemittel kann in Tropfenform, aber auch in Form eines Klebemittelfilms auf die Lamelle bzw. das Ausgangsmaterial aufgebracht werden. Dementsprechend ist die Strahlung so gestaltet, dass das Klebemittel einwandfrei während des Fluges bestrahlt wird.

Es ist weiter möglich, das Klebemittel mittels einer Auftragswalze auf die Lamelle oder das Ausgangsmaterial aufzubringen. In diesem Falle hat die Auftragswalze Kontakt mit der Lamelle bzw. dem Ausgangsmaterial.

Die Auftragswalze ist in vorteilhafter Weise so ausgebildet, dass sie ein Klebemuster auf die Lamelle bzw. das Ausgangsmaterial aufbringt. Das Klebemuster ist an die Form der herzustellenden Lamelle angepasst, so dass sich das Klebemittel nach dem Ausschneiden der Lamelle an der erforderlichen Stelle befindet.

Die erfindungsgemäße Anlage zeichnet sich dadurch aus, dass sie wenigstens eine Strahlungsquelle aufweist, die Strahlung in einem Wellenlängenbereich unterhalb des Infrarot-Wellenlängenbereiches aussendet.

Der Wellenlängenbereich liegt vorteilhaft in einem Bereich zwischen etwa 300 µm und etwa 700 µm.

Die Strahlungsquelle ist in vorteilhafter Weise so in der Anlage angeordnet, dass die von ihr ausgesandte Strahlung auf das auf der Lamelle bzw. auf dem Ausgangsmaterial befindliche Klebemittel betrifft. Das Klebemittel kann daher zunächst auf die Lamelle bzw. das Ausgangsmaterial aufgebracht und anschließend zur Voraktivierung bestrahlt werden.

Bei einer weiteren erfindungsgemäßen Ausbildung ist die Anlage so vorgesehen, dass die Strahlung der Strahlungsquelle auf das Klebemittel während des Fallens von der Auftragvorrichtung zur Lamelle trifft.

Eine solche Ausbildung ist besonders dann vorteilhaft, wenn der Klebemittelauftrag erst im Bereich des Heraustrennens der Lamelle erfolgt.

Um eine einwandfreie Voraktivierung des Klebemittels bei einer solchen Anordnung der Strahlungsquelle besonders zuverlässig zu gestalten, ist es vorteilhaft, wenn im Strahlweg der Strahlungsquelle eine Blende liegt, deren Öffnung hinsichtlich ihres Querschnittes vorzugsweise einstellbar ist. Dann kann die Strahlung unabhängig davon, ob das Klebemittel tropfenförmig, streifenförmig oder dergleichen ausgetragen wird, angepasst werden.

Es ist weiter möglich, die Auftragvorrichtung als um ihre Achse drehbare Auftragswalze zu gestalten, in deren Mantel wenigstens eine Austragsöffnung für das Klebemittel vorgesehen ist. Zum Klebemittelauftrag liegt die Auftragswalze an der Lamelle bzw. am Ausgangsmaterial an, wobei das Klebemittel über die Austragöffnung aufgetragen wird. Die Lage der Austragöffnung bzw. der Durchmesser der Auftragwalze wird so gewählt, dass das aus der Austragöffnung austretende Klebemittel an der für die spätere Paketbildung erforderlichen Lage auf die Lamelle bzw. das Ausgangsmaterial aufgebracht wird.

Die Austragöffnung ist vorteilhaft siebartig ausgebildet. Dann kann das Klebemittel durch die Sieböffnungen auf die Lamelle bzw. das Ausgangsmaterial aufgebracht werden. Insbesondere lässt sich mit der siebartigen Ausbildung in einfacher Weise ein Klebemuster auf die Lamelle bzw. das Ausgangsmaterial aufbringen.

Um einen sauberen Klebemittelauftrag sicherzustellen, liegt an der Auftragswalze vorteilhaft eine Reinigungswalze an, die achsparallel zur Austragswalze angeordnet ist und mit der die Walzenoberfläche frei von anhaftendem Klebemittel gehalten wird. Dadurch lässt sich in einfacher Weise erreichen, dass das Klebemittel nur in dem Bereich, indem sich die Austragöffnung befindet, auf die Lamelle bzw. das Ausgangsmaterial gelangt.

Der Anmeldungsgegenstand ergibt sich nicht nur aus dem Gegenstand der einzelnen Patentansprüche, sondern auch durch alle in den Zeichnungen und der Beschreibung offenbarten Angaben und Merkmale. Sie werden, auch wenn sie nicht Gegenstand der Ansprüche sind, als erfindungswesentlich beansprucht, soweit sie einzeln oder in Kombination gegenüber dem Stand der Technik neu sind.

Weitere Merkmale der Erfindung ergeben sich aus den weiteren Ansprüchen, der Beschreibung und den Zeichnungen.

Die Erfindung wird nachstehend anhand mehrerer in den Zeichnungen dargestellter Ausführungsformen näher erläutert. Es zeigt
- Fig. 1: in schematischer Darstellung eine erfindungsgemäße Anlage zum Aufbringen eines strahlungsaktivierbaren Klebstoffes auf ein Elektroband, aus dem Lamellen gestanzt oder geschnitten werden,
- Fig. 2: eine Draufsicht auf eine Auftragswalze der Anlage gemäß Fig. 1 in vergrößerter Darstellung,
- Fig. 3: die Abwicklung der Mantelfläche der Auftragswalze gem. Fig. 2 in die Zeichenebene,
- Fig. 4: in vergrößerter Darstellung einen Teil einer Lamelle mit einer geometriespezifischen Verklebung,
- Fig. 5: in vereinfachter Darstellung eine erfindungsgemäße Klebmittel-Auftragvorrichtung,
- Fig. 6 bis 10: in Darstellungen entsprechend Fig. 5 weitere Ausführungsformen von erfindungsgemäßen Klebemittel-Auftragvorrichtungen.

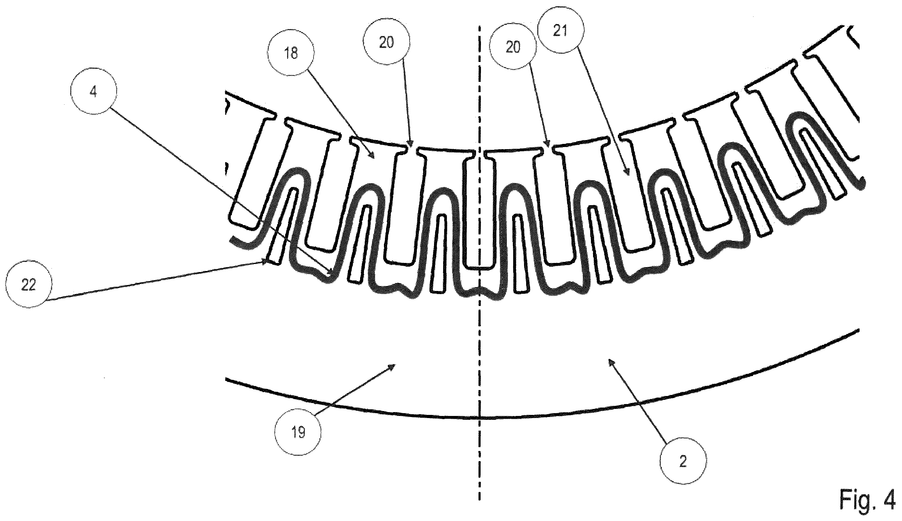

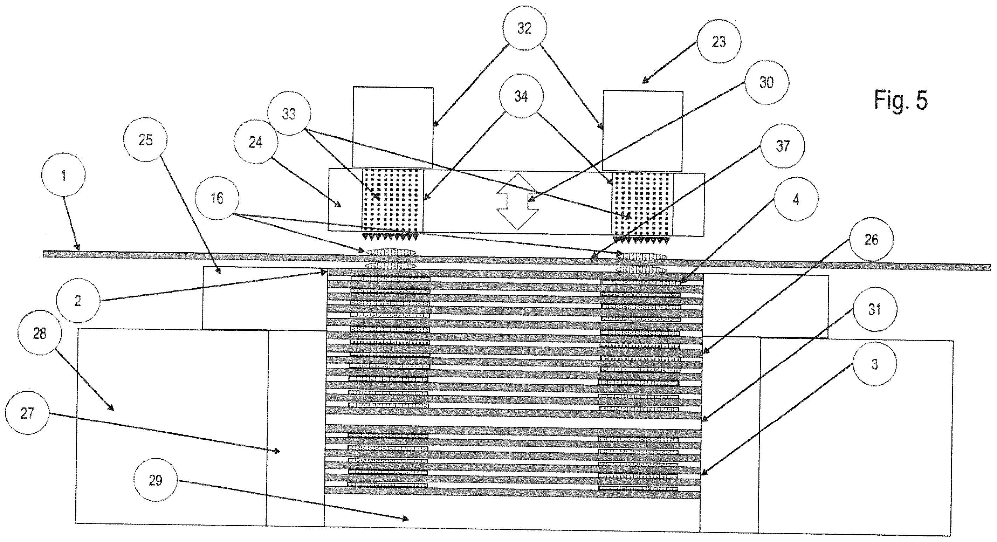

Mit den nachfolgend beschriebenen Anlagen und Vorrichtungen werden aus einem Elektroband 1 Lamellen 2 (Fig. 4 und 5) herausgetrennt und zur Bildung von Lamellenpaketen 3 gestapelt (Fig. 5). Diese Lamellenpakete werden für Rotoren oder Statoren von Elektromotoren oder Generatoren verwendet.

Innerhalb des Lamellenpaketes 3 sind die aufeinander liegenden Lamellen 2 fest miteinander mittels eines Klebemittels 4 verbunden.

Die Lamellen 2 können aus dem Elektroband 1 durch unterschiedliche Verfahren herausgetrennt werden, beispielsweise durch Stanzen, durch Wasserstrahlschneiden, durch Laserstrahlschneiden und dgl.

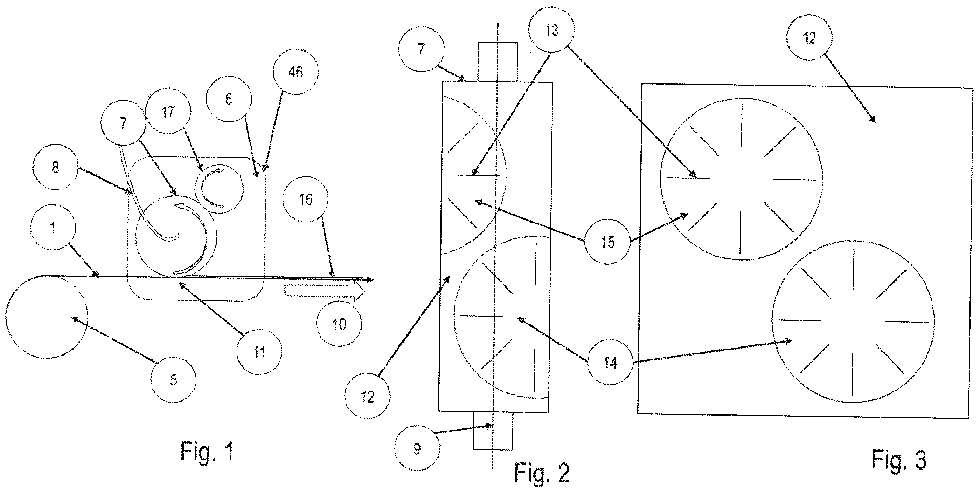

Das Elektroband 1 ist als Coil auf eine Haspel 5 aufgewickelt (Fig. 1), von der das Elektroband 1 in bekannter Weise abgewickelt und einer Trennstation zugeführt wird, in der die Lamellen 2 aus dem Elektroband 1 herausgetrennt werden.

Im Zuführweg zu dieser Trennstation ist wenigstens eine Klebemittel-Auftragsvorrichtung 6 (nachfolgend Auftragvorrichtung genannt) angeordnet. Mit ihr wird auf das Elektroband 1 das Klebemittel 4 aufgebracht.

Der Auftrag des Klebemittels 4 erfolgt durch wenigstens eine Auftragswalze 7, der das Klebemittel 4 über wenigstens eine Klebstoffzuleitung 8 zugeführt wird.

Die Auftragswalze 7 wird beim Klebmittelauftrag um ihre Achse 9 drehbar angetrieben. Wie aus Fig. 1 hervorgeht, dreht die Auftragswalze 7 in diesem Beispiel beim Klebemittelauftrag entgegen dem Uhrzeigersinn. Das Elektroband 1 wird in Transportrichtung 10 transportiert. Im Auftragbereich des Klebemittels 4 haben die Auftragswalze 7 und das Elektroband 1 somit gleiche Bewegungsrichtung.

Auf dem Walzenmantel 12 befindet sich wenigstens eine siebförmige Austragöffnung 13 (nachfolgend als Sieb bezeichnet), die eine Negativform der auf dem Elektroband 1 aufzubringenden Klebegeometrie ist.

Im dargestellten Ausführungsbeispiel sind auf dem Walzenmantel 12 zwei solcher Siebe 13 aufgebracht, die in Umfangsrichtung der Auftragswalze 7 versetzt zueinander angeordnet sind und Abstand voneinander haben.

Das in Fig. 3 untere Sieb 13 liegt in einer Werkzeugspur 14 und das obere Sieb 13 in einer Werkzeugspur 15. Die beiden Werkzeugspuren 14, 15 entsprechen den Werkzeugspuren des Elektrobandes 1. Die Lamellen 2 werden mit den entsprechenden Werkzeugen in zwei Spuren aus dem Elektroband 1 herausgetrennt, wobei die Werkzeugspuren der Trenneinrichtung den Werkzeugspuren 14, 15 der Auftragswalze 7 entsprechen.

Die Siebe 13 erzeugen auf der Lamelle 2 bzw. dem Elektroband 1 ein Klebemittelmuster, das an die Form der zu erzeugenden Lamelle 2 angepasst ist.

Das Klebemittel 4 wird über die Klebstoffleitung 8 der Auftragswalze 7 zugeführt. Vorteilhaft erfolgt die Zuführung des Klebemittels 4 in der Achse der Auftragswalze 7, die in ihrem Inneren entsprechende Zuleitungen zu den Sieben 13 auf dem Walzenmantel 12 aufweist. Das Klebmittel 4 kann durch die Siebe 13 auf die Oberseite des Elektrobandes 1 gelangen. Entsprechend der Geometrie der Siebe 13 entsteht auf der Oberseite des Elektrobandes 1 eine entsprechende Geometrie des Klebemittelauftrages 16.

Die Auftragswalze 7 ist in einem Gehäuse 46 untergebracht, in dem sich ein Schutzgas, wie Stickstoff, befindet, das den Zutritt von Sauerstoff verhindert. Das Klebemittel 4 bleibt dadurch jederzeit voraktivierbar.

Um einen sauberen Klebemittelauftrag auf das Elektroband 1 zu gewährleisten, hat die Auftragsvorrichtung 6 wenigstens eine Reinigungswalze 17, die an der Auftragswalze 7 anliegt und kleineren Durchmesser als diese hat. Die Reinigungswalze 17 kann drehbar angetrieben sein, aber auch durch ihren Kontakt mit der drehbar angetriebenen Auftragswalze 7 um ihre Achse gedreht werden. Die beiden Walzen 7, 17 drehen entgegengesetzt zueinander. Die Reinigungswalze 17 liegt vorteilhaft mit geringem Druck an der Auftragswalze 7 an.

Durch die achsparallel zur Auftragswalze 7 liegende Reinigungswalze 17 ist gewährleistet, dass die Oberseite der Auftragswalze 7 stets frei von Verunreinigungen ist, so dass ein sauberer Klebemittelauftrag auf das Elektroband 1 sichergestellt ist.

Je nach Gestaltung der Siebe 13 kann das Klebemittel 4 flächig oder auch linien- oder punktförmig auf das Elektroband 1 aufgetragen werden.

Fig. 4 zeigt die Möglichkeit, das Klebemittel 4 beispielsweise linienförmig auf das Elektroband 1 aufzubringen.

Die aus dem Elektroband 1 herausgetrennte Lamelle 2 hat im dargestellten Ausführungsbeispiel radial verlaufende Arme 18, die von einem ringförmigen Grundkörper 19 nach innen abstehen und Abstand voneinander haben. Die freien Enden der Arme 18 sind in beiden Umfangsrichtungen jeweils verbreitert ausgebildet, wobei die Verbreiterungen benachbarter Arme 18 jeweils eine Einführöffnung 20 begrenzen.

Zwischen den Armen 18 befinden sich Nuten 21 zur Aufnahme von (nicht dargestellten) Drahtwicklungen.

Die Arme 18 sind außerdem mit jeweils einer radial sich erstreckenden Kühlnut 22 versehen, die sich beispielsweise bis in den Grundkörper 19 erstreckt. Die Kühlnuten liegen in halber Breite der Arme 18.

Das Klebemittel 4 ist nun derart auf der Lamelle 2 aufgebracht, dass es die Kühlnuten 22 mit Abstand umschließt. Zwischen benachbarten Kühlnuten 22 ist das Klebemittel 4 über den ringförmigen Grundkörper 19 zwischen den Armen 18 geführt.

Auf diese Weise kann über den Umfang der ringförmigen Lamelle 2 ein durchgehender Klebemittelstang aufgebracht werden, über den innerhalb des Lamellenpaketes 3 aufeinander liegende Lamellen 2 fest miteinander verbunden werden können.

Das Lamellenpaket 3 kann aus ringförmigen Lamellen 2 gebildet sein, die als Ringe aus dem Elektroband 1 herausgetrennt werden. Bei größeren Durchmessern des Lamellenpaketes 3 werden aus dem Elektroband 1 teilringförmige Lamellen herausgetrennt, die anschließend zu einem Lamellenring zusammengesetzt werden.

Das eingesetzte Klebemittel 4 ist durch Strahlung aktivierbar. Zur Klebemittelaktivierung wird eine Strahlung verwendet, deren Wellenlänge im Bereich zwischen etwa 300 µm und etwa 700 µm liegt. Dieser Strahlungsbereich liegt unterhalb des Infrarot-Strahlungsbereiches.

Das Klebemittel 4 ist bevorzugt ein kationisch härtender Epoxidharz-Klebstoff.

Bei der Aktivierung des Klebemittels 4 mit einer Strahlung entsprechend dem angegebenen Wellenlängenbereich wird das Klebemittel 4 voraktiviert. Durch diese Voraktivierbarkeit hat das Klebemittel 4 eine solche Bindefestigkeit, dass die im Lamellenpaket 3 aufeinander liegenden Lamellen 2 fest miteinander verbunden sind, so dass das Lamellenpaket 3 sofort gehandhabt werden kann. Die vollständige Aushärtung des Klebemittels 4 erfolgt später bei Raumtemperatur.

Bei der Voraktivierung und bei der Aushärtung entsteht keine oder allenfalls nur eine geringe Erwärmung, so dass die Lamellen 2 keinen Verzug aufweisen, der bei der späteren Verwendung des Lamellenpaketes 3 zu technischen Problemen führen könnte. Da bei der Voraktivierung und dem Aushärten des Klebemittels 4 keine oder allenfalls nur eine geringe Wärme entsteht, ist auch keine Kühlung der Lamellen 2 bzw. des Lamellenpaketes 3 erforderlich.

Nach der Voraktivierung läuft die vollständige Aushärtung ohne zusätzliche Strahlungseinwirkung ab. Hierbei handelt es sich um eine sogenannte Schattenhärtung.

Der kationisch härtende Epoxidharzklebstoff ist elektrisch isolierend und spannungsausgleichend. Er kann über einen großen Temperaturbereich eingesetzt werden, der von etwa -40° C bis etwa 150° C und mehr liegt.

Die Voraktivierungszeit beträgt in typischer Weise nur wenige Sekunden. Diese Voraktivierungszeit ist ausreichend kurz, um das Lamellenpaket 3 aus den aufeinander liegenden und miteinander verklebten Lamellen 2 zu bilden.

Das Klebemittel 4 wird dort auf den Lamellen 2 aufgebracht, wo es für den Zusammenhalt und die Festigkeit des Lamellenpaketes 3 erforderlich ist.

Die Siebe 13 sind dementsprechend auf dem Walzenmantel 12 der Auftragswalze 7 an der entsprechenden Stelle vorgesehen, so dass sich der Klebemittel-Auftrag 16 auf dem Elektroband 1 an der gewünschten Stelle befindet. Nach dem Klebemittelauftrag werden aus dem Elektroband 1 die Lamellen 2 herausgetrennt, wobei sich der Klebemittel-Auftrag 16 bereits an der erforderlichen Stelle auf der auszustanzenden Lamelle 2 befindet.

Fig. 5 zeigt eine Stanzeinheit 23 der Anlage zum Ausstanzen der Lamellen 2 aus dem Elektroband 1. Die Stanzeinheit 23 hat einen Druckstempel 24, der mit einer Matrize 25 beim Stanzvorgang zusammenwirkt. Mit dem Druckstempel 24 wird die Lamelle 2 aus dem Elektroband 1 gestanzt und in einen Schacht 26 gedrückt, in welchem das Lamellenpaket 3 hergestellt wird. Die

Matrize 25 ist Teil eines Unterwerkzeuges 28, in welchem der Schacht 26 vorgesehen ist. Er wird im Bereich unterhalb der Matrize 25 von einer Paketbremse 27 begrenzt, mit welcher das zu bildende Lamellenpaket 3 im Schacht 26 gehalten ist. Die Paketbremse 26 liegt am Umfang des Lamellenpaketes 3 an und verhindert, dass das Lamellenpaket 3 nach unten fallen kann.

Es ist weiter möglich, im Schacht 26 einen (nicht dargestellten) Stempel vorzusehen, auf dem die erste Lamelle 2 des Lamellenpaketes 3 abgelegt wird. Mit jeder weiteren Lamelle 2 wird der Stempel entsprechend nach unten schrittweise verstellt. Auf diese Weise kann auf dem Stempel das Lamellenpaket 3 in der erforderlichen Höhe gestapelt werden.

Sobald das Lamellenpaket 3 im Schacht 26 die erforderliche Höhe erreicht hat, wird das Lamellenpaket 3 von einem Paketaustrag 29 aus dem Schacht 26 herausgeführt.

Da die Ausbildung der Stanzeinheit 23 grundsätzlich bekannt ist, ist sie nicht im Einzelnen beschrieben.

Beim Aufsetzen der Lamelle 2 auf die bereits im Schacht 26 befindlichen Lamellen wird durch den Druckstempel 24 ein Druck ausgeübt, der dazu führt, dass der Klebemittelauftrag 16 zusammengedrückt wird. Wie Fig. 5 zeigt, wird durch die Druckanwendung der Klebemittel-Auftrag 16 auseinander gedrückt, wodurch die Kontaktfläche zwischen den aufeinander liegenden Lamellen 2 entsprechend vergrößert wird.

Die Paketbremse 27 ist so ausgebildet, dass die von ihr ausgeübte, auf das Lamellenpaket 3 wirkende Bremskraft größer ist als die vom Druckstempel 24 ausgeübte Druckkraft.

Der Druckstempel 24 bewegt sich beim Stanzvorgang in Pfeilrichtung 30 in vertikaler Richtung.

Um im Schacht 26 aufeinander folgende Lamellenpakete 3 voneinander zu trennen, ist auf die letzte Lamelle 2 des Lamellenpaketes 3 kein Klebemittel aufgebracht. Dadurch erfolgt zwischen den übereinander liegenden Lamellenpaketen 3 eine Trennung 31.

Um das Klebemittel zu aktivieren, ist die Stanzeinheit 23 mit wenigstens einer UV-Lichtquelle 32 versehen, die UV-Licht 33 zur Aktivierung des Klebemittel-Auftrages 16 aussendet. Die UV-Lichtquelle 32 ist so ausgebildet, dass die von ihr ausgesandte Strahlung 33 parallel zur Stanzbewegungsrichtung 30 auf den Klebemittel-Auftrag 16 trifft.

Die UV-Lichtquelle 32 ist so ausgebildet, dass der Klebemittel-Auftrag 16 über seine gesamte Ausbreitung bestrahlt werden kann. Beispielhaft hat die UV-Lichtquelle 32 Spotlampen, die neben- und hintereinander angeordnet sind. Je nach Gestalt des Klebemittelauftrages 16 kann der aus der UV-Lichtquelle 32 austretende Lichtstrahl 33 gestaltet sein. Hat der Klebemittel-Auftrag 16 beispielsweise Kreisform, dann kann das UV-Licht 33 beispielsweise als Spotlicht gestaltet sein.

Der Druckstempel 24 ist für den Durchtritt des UV-Lichtes 33 mit einer entsprechenden Aussparung 34 versehen, durch welche das Licht auf den Klebemittel-Auftrag 16 gelangen kann. Die UV-Lichtquelle 32 ist vorteilhaft außerhalb des Druckstempels 24 angeordnet.

Das von der UV-Lichtquelle 32 ausgesandte UV-Licht liegt in dem oben angegebenen Wellenlängenbereich, auf den das Klebemittel 4 für die Voraktivierung eingestellt ist.

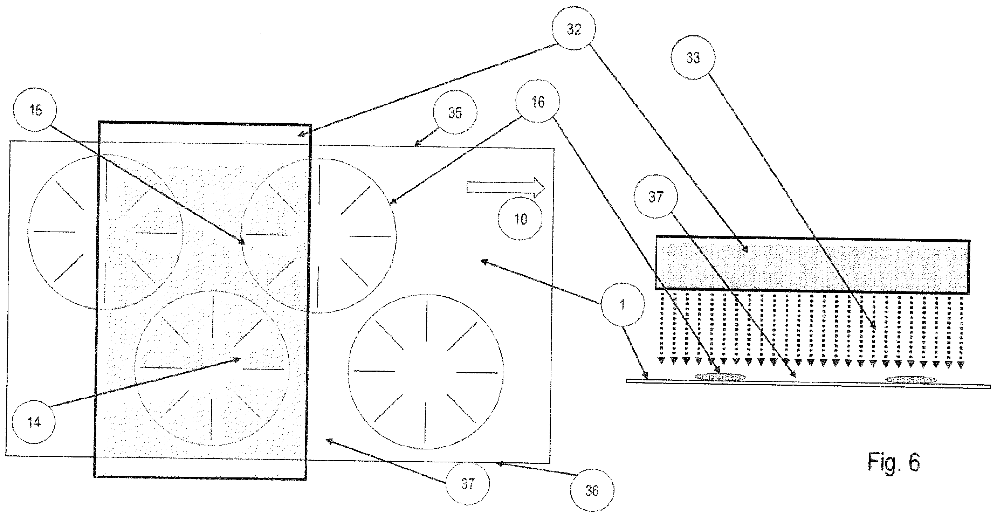

Fig. 6 zeigt die Möglichkeit, den Klebemittel-Auftrag 16 mittels eines flächigen UV-Lichtes 33 zu aktivieren. Auf dem Elektroband 1 befinden sich die Klebemittel-Aufträge 16, die in den beiden Spuren 14, 15 in der beschriebenen Weise angeordnet sind.

Die UV-Lichtquelle 32 ist als Flächenlampe ausgebildet, die sich quer zur Transportrichtung 10 des Elektrobandes 1 erstreckt. Die UV-Lichtquelle 32 ragt über die beiden Längsränder 35, 36 des Elektrobandes 1 hinaus.

Wie beim vorigen Ausführungsbeispiel befindet sich die UV-Lichtquelle 32 mit Abstand oberhalb des Elektrobandes 1 und damit des Klebemittel-Auftrages 16. Das UV-Licht 33 trifft wie bei der vorigen Ausführungsform senkrecht auf das Elektroband 1 und bewirkt die Voraktivierung des Klebemittel-Auftrages 16.

Das Elektroband 1 weist zwischen den Klebemittel-Aufträgen 16 vom Klebemittel ausgesparte Bereiche 37 auf.

Die UV-Lichtquelle 32 hat im Ausführungsbeispiel rechteckigen Umriss und strahlt das UV-Licht 33 über ihre gesamte Querschnittsbreite nach unten in Richtung auf den Klebemittel-Auftrag 16. Das UV-Licht 33 trifft auf den Klebemittel-Auftrag beider Werkzeugspuren 14 und 15. Dadurch ist eine Voraktivierung des Klebemittels in beiden Werkzeugspuren 14, 15 in einem Durchgang des Elektrobandes 1 möglich.

Die UV-Lichtquelle 32 ist entsprechend der vorigen Ausführungsform, bezogen auf die Transportrichtung 10 des Elektrobandes 1, ortsfest angeordnet.

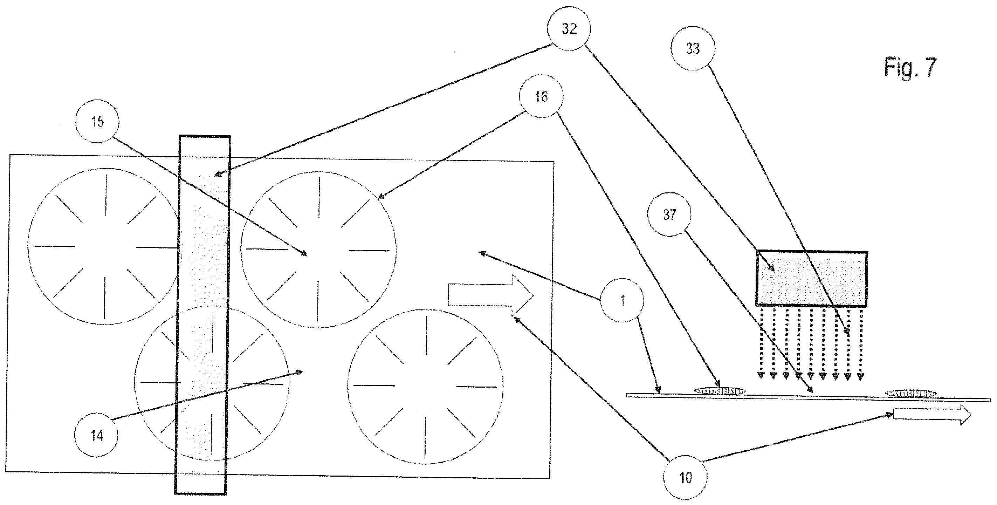

Fig. 7 zeigt eine ähnliche Ausbildung der UV-Lichtquelle 32 wie Fig. 6. Der Unterschied besteht lediglich darin, dass die UV-Lichtquelle 32 schmaler ausgebildet ist als beim Ausführungsbeispiel nach Fig. 6. Die Flächenbestrahlung mittels des UV-Lichtes 33 ist somit schmaler als beim vorigen Ausführungsbeispiel.

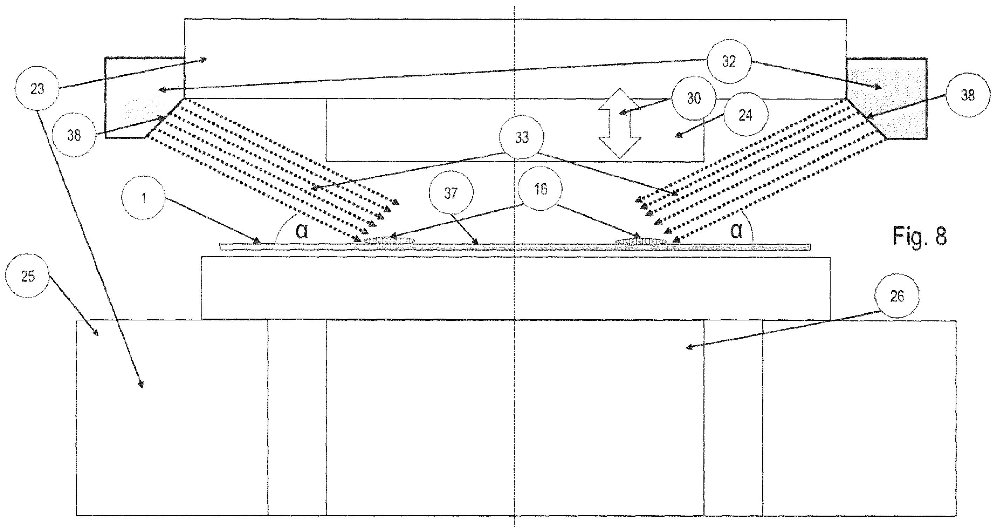

Bei der Ausführungsform nach Fig. 8 ist das UV-Licht 33 nicht senkrecht zur Oberseite des Elektrobandes 1 ausgerichtet, sondern winklig hierzu. Das UV-Licht 33 ist unter dem spitzen Winkel α zum Elektroband 1 gerichtet und trifft dementsprechend schräg auf das Klebemittel im jeweiligen Klebemittel-Auftrag 16.

Der Neigungswinkel α des UV-Lichtes 33 ist so gewählt, dass der jeweilige Klebemittel-Auftrag 16 einwandfrei aktiviert werden kann.

Die UV-Lichtquelle 32 hat schräg liegende Austrittsfenster 38, durch welche das UV-Licht 33 unter dem Neigungswinkel α austritt.

Die UV-Lichtquelle 32 ist so gestaltet, dass die aus ihr austretende Strahlung auf den jeweiligen Klebemittel-Auftrag 16 trifft.

Fig. 8 zeigt die Stanzeinheit 23 mit dem Druckstempel 24 und der Matrize 25. Der Druckstempel 24 wird in Pfeilrichtung 30 beim Stanzvorgang betätigt, um aus dem Elektroband 1 die Lamellen 2 herauszustanzen. Sie werden durch den Druckstempel 24 in der beschriebenen Weise in den Schacht 26 gedrückt, in dem aus den Lamellen 2 das Lamellenpaket 3 gebildet wird.

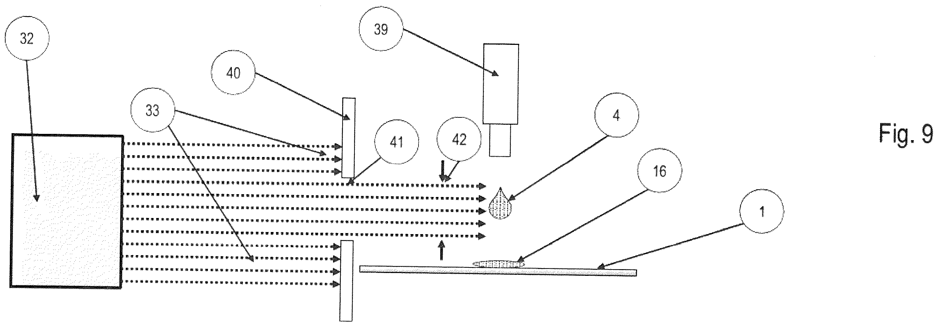

Bei der Ausführungsform gemäß Fig. 9 erstreckt sich das UV-Licht 33 parallel zum Elektroband 1. Das UV-Licht 33 tritt aus der UV-Lichtquelle 32 aus.

Das UV-Licht 33 erstreckt sich senkrecht zur Transportrichtung des Elektrobandes 1. In Fig. 9 ist die Transportrichtung senkrecht zur Zeichenebene.

Im Unterschied zu den vorigen Ausführungsformen wird nicht der Klebemittel-Auftrag 16 auf der Lamelle 2 bzw. dem Elektroband 1 mit dem UV-Licht bestrahlt, sondern das aus einer Auftragvorrichtung 39 austretende Klebemittel 4. Die Auftragvorrichtung 39 ist vorteilhaft eine Ventileinrichtung, mit der das Klebemittel 4 in Tropfenform nach unten auf das Elektroband 1 fällt. Während des Fluges des Tropfens wird das Klebemittel 4 durch das UV-Licht 33 bestrahlt. Wenn der Klebemitteltropfen auf das Elektroband 1 fällt und dort den Klebemittel-Auftrag 16 bildet, ist er durch das UV-Licht 33 bereits voraktiviert.

Vorteilhaft befindet sich im Bereich zwischen der UV-Lichtquelle 32 und der Auftragvorrichtung 39 eine schirmartige Blende 40, die dafür sorgt, dass das UV-Licht 33 gezielt auf die aus der Auftragvorrichtung 34 austretenden Klebemittel-Tropfen trifft. Vorteilhaft ist es, wenn der Öffnungsquerschnitt der Blendenöffnung 41 verstellbar ist, so dass in Abhängigkeit von der Art des Klebemittels 4 und/oder der UV-Lichtquelle 32 bzw. des verwendeten UV-Lichtes eine zuverlässige Voraktivierung des jeweiligen Klebemittels 4 gewährleistet ist.

Vorteilhaft ist die Anlage mit mehreren Auftragvorrichtungen 39 versehen, über welche das Klebemittel 4 an den erforderlichen Stellen auf das Elektroband 1 aufgebracht wird. Die UV-Lichtquelle 32 ist so ausgebildet, dass die aus den verschiedenen Auftragvorrichtungen 39 austretenden Klebemittel-Tropfen voraktiviert werden.

Die Auftragvorrichtung 39 ist in einem solchen Abstand oberhalb des Elektrobandes 1 angeordnet, dass die austretenden Klebemittel-Tropfen ausreichend lange mit dem UV-Licht 33 bestrahlt werden können. Hierfür trägt in vorteilhafter Weise bei, wenn die Blendenöffnung 41 in ihrer Größe einstellbar ist. Dann kann der durch die Blendenöffnung 41 in Richtung auf den Klebemittel-Tropfen 4 hindurchtretende Strahlbereich des UV-Lichtes 33 entsprechend in seiner Breite, gemessen senkrecht zum Elektroband 1, eingestellt werden kann. Dementsprechend kann die Breite 42 des durch die Blendenöffnung 41 hindurchtretenden Teiles des UV-Lichtes 33 entsprechend angepasst werden.

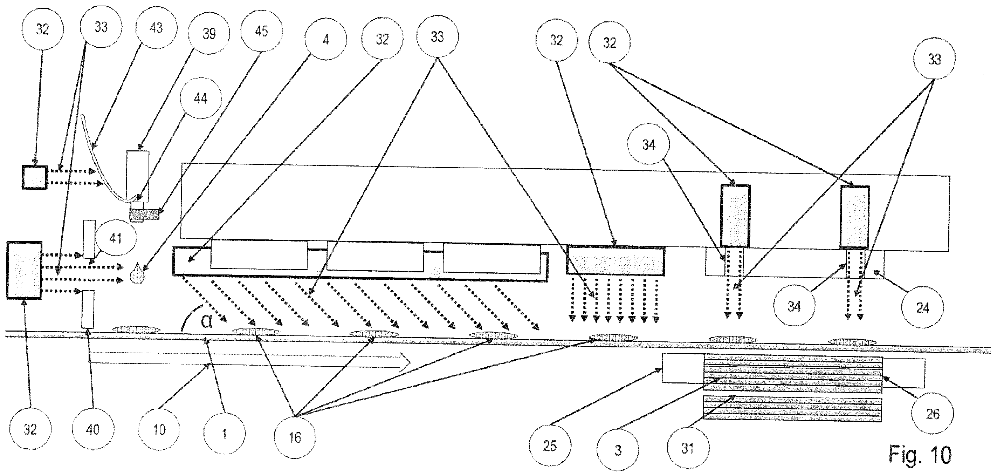

Fig. 10 zeigt die Möglichkeit, in der Anlage unterschiedliche Bestrahlungsarten vorzusehen.

In Transportrichtung 10 des Elektrobandes 1 ist zunächst eine Einrichtung vorgesehen, wie sie anhand von Fig. 9 erläutert worden ist. Die aus der Auftragvorrichtung 39 nach unten fallenden Klebemittel-Tropfen 4 werden durch die Bestrahlung mit dem UV-Licht 33 voraktiviert, das durch die Öffnung 41 der Blende 40 parallel zur Oberseite des Elektrobandes 1 verläuft. Auf dem Elektroband 1 bilden die Klebemittel-Tropfen 4 den jeweiligen Klebemittel-Auftrag 16.

In Transportrichtung 10 nachgeschaltet ist die UV-Lichtquelle 32, die gemäß Fig. 8 so ausgebildet ist, dass das UV-Licht 33 unter dem Winkel α auf die Oberseite des Elektrobandes 1 bzw. des jeweiligen Klebemittel-Auftrages 16 gelangt. Diese UV-Lichtquelle 32 ist vorteilhaft so ausgebildet, dass sie das UV-Licht 33 kontinuierlich abstrahlt.

In Transportrichtung 10 hinter dieser UV-Lichtquelle 32 ist eine Anordnung entsprechend Fig. 7 vorgesehen, die quer zur Transportrichtung 10 schmaler ist als die vorangehende UV-Lichtquelle 32 mit dem schräg austretenden UV-Licht 33.

Im Bereich des Schachtes 26 zur Bildung des Lamellenpaketes 3 ist eine UV-Lichtquelle 32 entsprechend der Ausführungsform gemäß Fig. 5 vorgesehen. Das UV-Licht 33 strahlt durch die Aussparungen 34 im Druckstempel 24 nach unten auf das Elektroband 1 bzw. auf den auf ihm befindlichen jeweiligen Klebemittel-Auftrag 16.

Fig. 10 zeigt weiter die Möglichkeit, das Klebemittel 4 schon in einer Zuleitung 43 zur Auftragvorrichtung 39 mit UV-Licht 33 zu bestrahlen.

Vorteilhaft ist die Auftragvorrichtung 39 an ihrem Klebemittelauslass 44 von einem Heizelement 45 umgeben, das dafür sorgen kann, dass das Klebemittel 4 einwandfrei in Tropfenform nach unten auf das Elektroband 1 fällt.

Die Anlage gemäß Fig. 10 ist nur als Beispiel dafür zu sehen, dass unterschiedliche Arten von Bestrahlungseinheiten in Kombination miteinander eingesetzt werden können. Welche der Bestrahlungseinheiten eingesetzt werden, hängt vom jeweiligen Einsatzfall der Anlage ab. So können die verschiedenen UV-Lichtquellen 32 eingesetzt werden, wenn dies die Art des Klebemittels 4 erfordert, um eine ausreichende Voraktivierung zu erreichen.

Bei allen beschriebenen Möglichkeiten werden die Lamellen 2 durch das Klebemittel 4 nicht oder nur so wenig erwärmt, dass ein Verzug oder Spannungen in der Lamelle 2 nicht auftreten. Das aus dem Lamellenpaket 3 hergestellte Rotor- oder Statorpaket weist darum gute elektrische Eigenschaften auf. Es ist darauf zurückzuführen, dass für die Bestrahlung ein Wellenlängenbereich der Lichtquelle eingesetzt wird, der kleiner ist als der Wellenbereich, der für eine IR-Bestrahlung vorgesehen wird.

Bei der Ausführung gemäß Fig. 9 kann das Klebemittel 4 nicht nur in Tropfenform einzelnen nacheinander auf das Elektroband 1 aufgebracht werden. Die Auftragvorrichtung 39 kann auch so gestaltet sein, dass das Klebemittel beispielsweise in Form eines Klebemittelschleiers aus der Auftragvorrichtung 39 austritt. Die UV-Lichtquelle 32 ist hierbei so ausgebildet, dass die von ihr ausgesandte Strahlung den Klebemittelschleier vollständig erfasst und voraktiviert. Das UV-Licht 33 verläuft in diesem Falle vorteilhaft senkrecht zum Klebemittelschleier, so dass er einwandfrei bestrahlt und damit voraktiviert wird.

## Patentansprüche

1. Verfahren zur Herstellung von Lamellenpaketen (3) aus aufeinander liegenden Lamellen (2) die aus einem Ausgangsmaterial (1) herausgetrennt und unter Vermittlung eines strahlungsaktivierbaren Klebemittels (4) innerhalb des Lamellenpaketes (3) miteinander verbunden werden, **dadurch gekennzeichnet, dass** das Klebemittel (4) mit einer Strahlung mit einem Wellenlängenbereich unterhalb von IR-Strahlung zur Voraktivierung bestrahlt wird.

2. Verfahren nach Anspruch 1,
**dadurch gekennzeichnet, dass** der Wellenlängenbereich der Strahlung in einem Bereich zwischen etwa 300 µm und 700 µm liegt.

3. Verfahren nach Anspruch 1 oder 2,
**dadurch gekennzeichnet, dass** das Klebemittel (4) durch die Bestrahlung so aktiviert wird, dass die Lamellen (2) im Lamellenpaket (3) derart fest miteinander verbunden sind, sodass das Lamellenpaket (3) eine Handfestigkeit aufweist.

4. Verfahren nach einem der Ansprüche 1 bis 3,
**dadurch gekennzeichnet, dass** das Klebemittel (4) ein kationisch härtender Epoxidharz-Klebstoff ist.

5. Verfahren nach einem der Ansprüche 1 bis 4,
**dadurch gekennzeichnet, dass** das Klebemittel (4) innerhalb des Lamellenpaketes (3) so aushärtet, dass das Lamellenpaket (3) die erforderliche Paketfestigkeit aufweist.

6. Verfahren nach einem der Ansprüche 1 bis 5,
**dadurch gekennzeichnet, dass** die Strahlung (33) auf das auf der Lamelle (2) befindliche Klebemittel (4) gerichtet wird.

7. Verfahren nach einem der Ansprüche 1 bis 6,
**dadurch gekennzeichnet, dass** die Strahlung (33) senkrecht auf die Lamelle (2) bzw. das Ausgangsmaterial (1) fällt.

8. Verfahren nach einem der Ansprüche 1 bis 6,
**dadurch gekennzeichnet, dass** die Strahlung (33) unter einem von 90° abweichenden Winkel (α) auf die Lamelle (2) bzw. das Ausgangsmaterial (1) fällt.

9. Verfahren, insbesondere nach einem der Ansprüche 1 bis 5,
**dadurch gekennzeichnet, dass** das Klebemittel (4) während des Auftrags von einer Auftragvorrichtung (39) zur Lamelle (2) bzw. zum Ausgangsmaterial (1) während des Fluges bestrahlt wird.

10. Verfahren nach einem der Ansprüche 1 bis 8,
**dadurch gekennzeichnet, dass** das Klebemittel (4) mittels wenigstens einer Auftragswalze (7) aufgebracht wird.

11. Verfahren nach Anspruch 10,
**dadurch gekennzeichnet, dass** mit der Auftragswalze (7) ein Klebemittelmuster aufgebracht wird.

12. Anlage zur Durchführung des Verfahrens nach einem der Ansprüche 1 bis 11, mit wenigstens einer Auftragvorrichtung (7, 39) zum Aufbringen eines Klebemittels (4) auf eine Lamelle (2), das mit wenigstens einer Strahlungsquelle (32) bestrahlt wird,
**dadurch gekennzeichnet, dass** die Strahlungsquelle (32) eine Strahlung in einen Wellenlängenbereich unterhalb des Infrarotbereiches aussendet.

13. Anlage nach Anspruch 12,
**dadurch gekennzeichnet, dass** der Wellenlängenbereich zwischen 300 µm und 700 µm liegt.

14. Anlage nach Anspruch 12 oder 13,
**dadurch gekennzeichnet, dass** die Strahlung (33) der Strahlungsquell (32) auf das auf der Lamelle (2) bzw. auf dem Ausgangsmaterial (1) befindliche Klebemittel (4) gerichtet ist.

15. Anlage nach Anspruch 12 oder 13,
**dadurch gekennzeichnet, dass** die Strahlung (33) der Strahlungsquelle (32) so gerichtet ist, dass die Strahlung (33) auf das im Fallen von der Auftragvorrichtung (39) auf die Lamelle (2) befindliche Klebemittel (4) trifft.

16. Anlage nach Anspruch 15,
**dadurch gekennzeichnet, dass** im Strahlweg der Strahlungsquelle (32) eine Blende (40) liegt, deren Öffnung (41) hinsichtlich ihres Querschnittes vorzugsweise einstellbar ist.

17. Anlage nach einem der Ansprüche 12 bis 16,
**dadurch gekennzeichnet, dass** die Auftragvorrichtung (7) eine um ihre Achse drehbare Auftragswalze ist, in deren Mantel (12) wenigstens eine Auftragsöffnung (13) für das Klebemittel (4) vorgesehen ist.

18. Anlage nach Anspruch 17,
**dadurch gekennzeichnet, dass** die Auftragsöffnung (13) siebartig ausgebildet ist.

19. Anlage nach Anspruch 17 oder 18,
**dadurch gekennzeichnet, dass** an der Auftragswalze (7) ein achsparallel zu ihr angeordnete Reinigungswalze (17) anliegt.
